# EUROPEAN PATENT SPECIFICATION

(11) **EP 1 714 422 B1**
(45) Date of publication and mention of the grant of the patent: **11.07.2007**
(21) Application number: 05701444.1
(22) Date of filing: 05.01.2005
(51) Int. Cl.: H04L 9/08, H04L 9/32

(54) **ESTABLISHING A SECURE CONTEXT FOR COMMUNICATING MESSAGES BETWEEN COMPUTER SYSTEMS**
EINRICHTEN EINES SICHEREN KONTEXTS ZUR ÜBERMITTLUNG VON NACHRICHTEN ZWISCHEN COMPUTERSYSTEMEN
ETABLISSEMENT D'UN CONTEXTE SECURISE POUR DES MESSAGES DE COMMUNICATION ENTRE DES SYSTEMES INFORMATIQUES

(30) Priority: 08.01.2004 US 753842
(43) Date of publication of application: 25.10.2006
(73) Proprietor: International Business Machines Corporation, Armonk, NY 10504 (US)
(72) Inventor: ASHLEY, Paul, Anthony, Bardon, Queensland 4065 (AU); FYFE, Robert, Andrew, Broadbeach, Queensland 4218 (AU); THOMAS, Michael, James, Bonogin, Queensland 4213 (AU)
(74) Representative: Roberts, Scott Anthony
(86) International application number: PCT/EP2005/050032
(87) International publication number: WO 2005/069531

(56) References cited:
- US-A1- 2002 080 958
- PEYRAVIAN M ET AL: "Decentralized group key management for secure multicast communications" COMPUTER COMMUNICATIONS, ELSEVIER SCIENCE PUBLISHERS BV, AMSTERDAM, NL, vol. 22, no. 13, 25 August 1999 (1999-08-25), pages 1183-1187, XP004178578 ISSN: 0140-3664
- BOYD C ET AL: "Key establishment protocols for secure mobile communications: a critical survey" COMPUTER COMMUNICATIONS, ELSEVIER SCIENCE PUBLISHERS BV, AMSTERDAM, NL, vol. 23, no. 5-6, March 2000 (2000-03), pages 575-587, XP004203012 ISSN: 0140-3664

## Description

### Technical Field

The present invention relates to an improved data processing system and, in particular, to a method and apparatus for multicomputer data transferring. Still more particularly, the present invention provides a method and apparatus for multicomputer communication using cryptography.

### Background Art

E-commerce web sites and other types of applications perform transactions over computer networks on behalf of users and clients. Prior to performing a requested operation on behalf of a client, the client must often pass through an authentication procedure in order to prove the client's identity to an appropriate level of certainty for security purposes.

Many data processing systems support client authentication operations through the Generic Security Service application programming interface (GSS-API), which is described in Linn, "Generic Security Services Application Program Interface", Internet Engineering Task Force (IETF) Request for Comments (RFC) 1508, September 1993, obsoleted by Linn, "Generic Security Services Application Program Interface, Version 2", IETF RFC 2078, January 1997. As described in those documents, GSS-API provides security services to callers in a generic fashion. GSS-API supports a range of underlying mechanisms and technologies through defined services and primitives, thereby allowing source-level portability of applications to different operational and programming language environments.

Alternate existing GSS-API mechanisms are presented in Adams, "The Simple Public-Key GSS-API Mechanism (SPKM)", IETF RFC 2025, October 1996, and Eisler, "LIPKEY--A Low Infrastructure Public Key Mechanism Using SPKM", IETF RFC 2847, June 2000. As described in those documents, SPKM provides authentication, key establishment, data integrity, and data confidentiality in an on-line distributed application environment using a public-key infrastructure. By conforming to GSS-API, SPKM can be used by any application that uses GSS-API calls for accessing security services. Alternatively, LIPKEY also provides a method for supplying a secure channel between a client and a server. LIPKEY is somewhat analogous to the common low infrastructure usage of the Transport Layer Security (TLS), which is an alternative method to GSS-API for implementing security functions like authentication, data integrity, and data privacy; TLS is described in Dierks et al., "The TLS Protocol, Version 1.0", IETF RFC 2246, January 1999 LIPKEY leverages SPKM as a separate GSS-API mechanism layered above SPKM.

Given the computational demands of busy server systems, there is a need for flexible and lightweight security operations. Therefore, it would be advantageous to have a GSS-API-compliant mechanism that handles a number of forms of client authentication.

### Disclosure of Invention

A method according to claims 1 and 2, a computer program product according to claims 2 and 3, and an apparatus according to claims 5 and 6 for establishing a secure context for communicating messages between a client and a server is presented that is compliant with the Generic Security Service application programming interface (GSS-API). The client sends to the server a first message containing a first symmetric secret key generated by the client and an authentication token; the first message is secured with the public key from a public key certificate associated with the server. Assuming that the server is able to authenticate the client based on the authentication token, the client then receives from the server a second message that has been secured with the first symmetric secret key and that contains a second symmetric secret key. The client and the server employ the second symmetric secret key to secure subsequent messages sent between the client and the server. The authentication token may be a public key certificate associated with the client, a username-password pair, or a secure ticket.

### Brief Description of the Drawings

A preferred embodiment of the present invention will now be in detail by way of example only with reference to the following figures in which:

**FIG. 1A** depicts a typical network of data processing systems, each of which may implement preferred embodiments of the present invention;

**FIG. 1B** depicts a typical computer architecture that may be used within a data processing system in which preferred embodiments of the present invention may be implemented;

**FIG. 2** depicts a block diagram that shows a typical manner in which an individual obtains a digital certificate;

**FIG. 3** depicts a block diagram that shows a typical manner in which an entity may use a digital certificate to be authenticated to a data processing system;

**FIG. 4** depicts a data flow diagram that shows a typical GSS-API-compliant mechanism for establishing a secure communication context between a client and a server; and

**FIG. 5** depicts a data flow diagram that shows a typical GSS-API-compliant mechanism for establishing a secure communication context between a client and a server in accordance with an embodiment of the present invention.

### Mode for the Invention

In general, the devices that may comprise or relate to preferred embodiments of the present invention include a wide variety of data processing technology. Therefore, as background, a typical organization of hardware and software components within a distributed data processing system is described prior to describing preferred embodiments of the present invention in more detail.

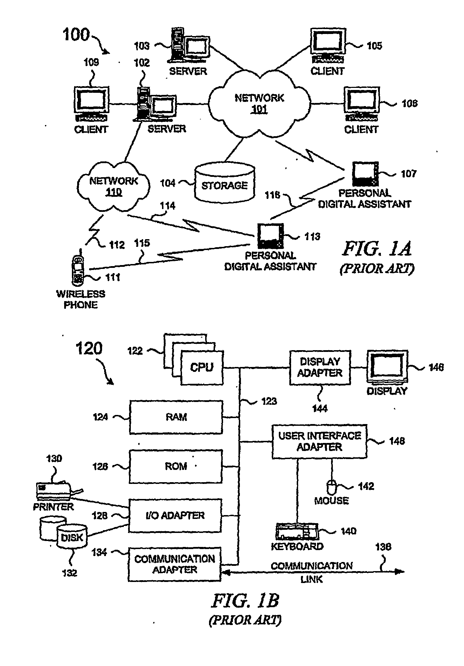

With reference now to the figures, **FIG. 1A** depicts a typical network of data processing systems, each of which may implement a portion of preferred embodiments of the present invention. Distributed data processing system **100** contains network **101,** which is a medium that may be used to provide communications links between various devices and computers connected together within distributed data processing system **100.** Network **101** may include permanent connections, such as wire or fiber optic cables, or temporary connections made through telephone or wireless communications. In the depicted example, server **102** and server **103** are connected to network **101** along with storage unit **104.** In addition, clients **105-107** also are connected to network **101.** Clients **105-107** and servers **102-103** may be represented by a variety of computing devices, such as mainframes, personal computers, personal digital assistants (PDAs), etc. Distributed data processing system **100** may include additional servers, clients, routers, other devices, and peer-to-peer architectures that are not shown.

In the depicted example, distributed data processing system **100** may include the Internet with network **101** representing a worldwide collection of networks and gateways that use various protocols to communicate with one another, such as Lightweight Directory Access Protocol (LDAP), Transport Control Protocol/Internet Protocol (TCP/IP), Hypertext Transport Protocol (HTTP), Wireless Application Protocol (WAP), etc. Of course, distributed data processing system **100** may also include a number of different types of networks, such as, for example, an intranet, a local area network (LAN), or a wide area network (WAN). For example, server **102** directly supports client **109** and network **110,** which incorporates wireless communication links. Network-enabled phone **111** connects to network **110** through wireless link **112,** and PDA **113** connects to network **110** through wireless link **114.** Phone **111** and PDA **113** can also directly transfer data between themselves across wireless link **115** using an appropriate technology, such as Bluetooth^{™} wireless technology, to create so-called personal area networks (PAN) or personal ad-hoc networks. In a similar manner, PDA **113** can transfer data to PDA **107** via wireless communication link **116.**

Preferred embodiments of the present invention could be implemented on a variety of hardware platforms; **FIG. 1A** is intended as an example of a heterogeneous computing environment and not as an architectural limitation for preferred embodiments of the present invention.

With reference now to **FIG. 1B,** a diagram depicts a typical computer architecture of a data processing system, such as those shown in **FIG. 1A,** in which preferred embodiments of the present invention may be implemented. Data processing system **120** contains one or more central processing units (CPUs) **122** connected to internal system bus **123,** which interconnects random access memory (RAM) **124,** read-only memory **126,** and input/output adapter **128,** which supports various I/O devices, such as printer **130,** disk units **132,** or other devices not shown, such as an audio output system, etc. System bus **123** also connects communication adapter **134** that provides access to communication link **136.** User interface adapter **148** connects various user devices, such as keyboard **140** and mouse **142,** or other devices not shown, such as a touch screen, stylus, microphone, etc. Display adapter **144** connects system bus **123** to display device **146.**

Those of ordinary skill in the art will appreciate that the hardware in **FIG. 1B** may vary depending on the system implementation. For example, the system may have one or more processors, such as an Intel^{®} Pentium^{®}-based processor and a digital signal processor (DSP), and one or more types of volatile and non-volatile memory. Other peripheral devices may be used in addition to or in place of the hardware depicted in **FIG. 1B.** The depicted examples are not meant to imply architectural limitations with respect to preferred embodiments of the present invention.

In addition to being able to be implemented on a variety of hardware platforms, preferred embodiments of the present invention may be implemented in a variety of software environments. A typical operating system may be used to control program execution within each data processing system. For example, one device may run a Unix^{®} operating system, while another device contains a simple Java^{®} runtime environment. A representative computer platform may include a browser, which is a well known software application for accessing hypertext documents in a variety of formats, such as graphic files, word processing files, Extensible Markup Language (XML), Hypertext Markup Language (HTML), Handheld Device Markup Language (HDML), Wireless Markup Language (WML), and various other formats and types of files.

The descriptions of the figures herein involve certain actions by either a client device or a user of the client device. One of ordinary skill in the art would understand that responses and/or requests to/from the client are sometimes initiated by a user and at other times are initiated automatically by a client, often on behalf of a user of the client. Hence, when a client or a user of a client is mentioned in the description of the figures, it should be understood that the terms "client" and "user" can be used interchangeably without significantly affecting the meaning of the described processes.

Preferred embodiments of the present invention may be implemented on a variety of hardware and software platforms, as described above with respect to **FIG. 1A** and **FIG. 1B.** More specifically, though, preferred embodiments of the present invention is directed to an improved public-key-based mechanism for establishing a secure context for communication between a client and a server that is compliant with the Generic Security Services Application Program Interface (GSS-API); a secure context comprises information that is shared between two or more communicating entities for the duration of a communication session during which multiple secure messages may be exchanged between the communicating entities. Before describing a preferred embodiment of the present invention in more detail, though, some background information about digital certificates is provided for evaluating the operational efficiencies and other advantages of preferred embodiments of the present invention.

Digital certificates support public key cryptography in which each party involved in a communication or transaction has a pair of keys, called the public key and the private key. Each party's public key is published while the private key is kept secret. Public keys are numbers associated with a particular entity and are intended to be known to everyone who needs to have trusted interactions with that entity. Private keys are numbers that are supposed to be known only to a particular entity, i.e. kept secret. In a typical asymmetric cryptographic system, a private key corresponds to exactly one public key.

Within a public key cryptography system, since all communications involve only public keys and no private key is ever transmitted or shared, confidential messages can be generated using only public information and can be decrypted using only a private key that is in the sole possession of the intended recipient. Furthermore, public key cryptography can be used for authentication, i.e. digital signatures, as well as for privacy, i.e. Encryption.

Encryption is the transformation of data into a form unreadable by anyone without a secret decryption key; encryption ensures privacy by keeping the content of the information hidden from anyone for whom it is not intended, even those who can see the encrypted data. Authentication is a process whereby the receiver of a digital message can be confident of the identity of the sender and/or the integrity of the message.

For example, when a sender encrypts a message, the public key of the receiver is used to transform the data within the original message into the contents of the encrypted message. A sender uses a public key of the intended recipient to encrypt data, and the receiver uses its private key to decrypt the encrypted message.

When authenticating data, data can be signed by computing a digital signature from the data using the private key of the signer. Once the data is digitally signed, it can be stored with the identity of the signer and the signature that proves that the data originated from the signer. A signer uses its private key to sign data, and a receiver uses the public key of the signer to verify the signature.

A certificate is a digital document that vouches for the identity and key ownership of entities, such as an individual, a computer system, a specific server running on that system, etc. Certificates are issued by certificate authorities. A certificate authority (CA) is an entity, usually a trusted third party to a transaction, that is trusted to sign or issue certificates for other people or entities. The CA usually has some kind of legal responsibilities for its vouching of the binding between a public key and its owner that allow one to trust the entity that signed a certificate. There are many commercial certificate authorities; these authorities are responsible for verifying the identity and key ownership of an entity when issuing the certificate.

If a certificate authority issues a certificate for an entity, the entity must provide a public key and some information about the entity. A software tool, such as specially equipped Web browsers, may digitally sign this information and send it to the certificate authority. The certificate authority might be a commercial company that provides trusted third-party certificate authority services. The certificate authority will then generate the certificate and return it. The certificate may contain other information, such as a serial number and dates during which the certificate is valid. One part of the value provided by a certificate authority is to serve as a neutral and trusted introduction service, based in part on their verification requirements, which are openly published in their Certification Service Practices (CSP).

A CA creates a new digital certificate by embedding the requesting entity's public key along with other identifying information and then signing the digital certificate with the CA's private key. Anyone who receives the digital certificate during a transaction or communication can then use the public key of the CA to verify the signed public key within the certificate. The intention is that the CA's signature acts as a tamper-proof seal on the digital certificate, thereby assuring the integrity of the data in the certificate.

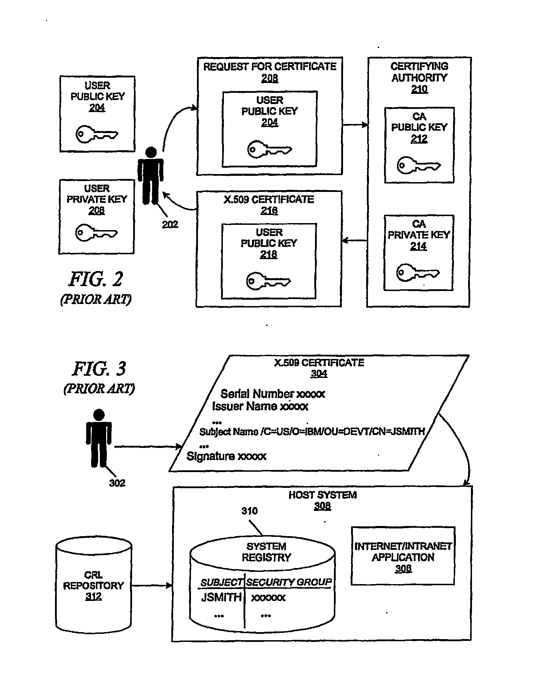

Other aspects of certificate processing are also standardized. The Certificate Request Message Format (RFC 2511) specifies a format that has been recommended for use whenever a relying party is requesting a certificate from a CA. Certificate Management Protocols have also been promulgated for transferring certificates. A preferred embodiment of the present invention resides in a distributed data processing system that employs digital certificates; the description of **FIGs. 2-3** provides background information about typical operations involving digital certificates.

With reference now to **FIG. 2,** a block diagram depicts a typical manner in which an individual obtains a digital certificate. User **202,** operating on some type of client computer, has previously obtained or generated a public/private key pair, e.g., user public key **204** and user private key **206.** User **202** generates a request for certificate **208** containing user public key **204** and sends the request to certifying authority **210,** which is in possession of CA public key **212** and CA private key **214.** Certifying authority **210** verifies the identity of user **202** in some manner and generates X.509 digital certificate **216** containing user public key **218.** The entire certificate is signed with CA private key **214;** the certificate includes the public key of the user, the name associated with the user, and other attributes. User **202** receives newly generated digital certificate **216,** and user **202** may then present digital certificate **216** as necessary to engage in trusted transactions or trusted communications. An entity that receives digital certificate **216** from user **202** may verify the signature of the CA by using CA public key **212,** which is published and available to the verifying entity.

With reference now to **FIG. 3,** a block diagram depicts a typical manner in which an entity may use a digital certificate to be authenticated to a data processing system. User **302** possesses X.509 digital certificate **304,** which is transmitted to an Internet or intranet application **306** on host system **308;** application **306** comprises X.509 functionality for processing and using digital certificates. User **302** signs or encrypts data that it sends to application **306** with its private key.

The entity that receives certificate **304** may be an application, a system, a subsystem, etc. Certificate **304** contains a subject name or subject identifier that identifies user **302** to application **306,** which may perform some type of service for user **302.** The entity that uses certificate **304** verifies the authenticity of the certificate before using the certificate with respect to the signed or encrypted data from user **302.**

Host system **308** may also contain system registry **310** which is used to authorize user **302** for accessing services and resources within system **308,** i.e. to reconcile a user's identity with user privileges. For example, a system administrator may have configured a user's identity to belong to certain a security group, and the user is restricted to being able to access only those resources that are configured to be available to the security group as a whole. Various well-known methods for imposing an authorization scheme may be employed within the system.

In order to properly validate or verify a digital certificate, an application must check whether the certificate has been revoked. When the certifying authority issues the certificate, the certifying authority generates a unique serial number by which the certificate is to be identified, and this serial number is stored within the "Serial Number" field within an X.509 certificate. Typically, a revoked X.509 certificate is identified within a CRL via the certificate's serial number; a revoked certificate's serial number appears within a list of serial numbers within the CRL.

In order to determine whether certificate **304** is still valid, application **306** obtains a certificate revocation list (CRL) from CRL repository **312** and validates the CRL. Application **306** compares the serial number within certificate **304** with the list of serial numbers within the retrieved CRL, and if there are no matching serial numbers, then application **306** validates certificate **304.** If the CRL has a matching serial number, then certificate **304** should be rejected, and application **306** can take appropriate measures to reject the user's request for access to any controlled resources.

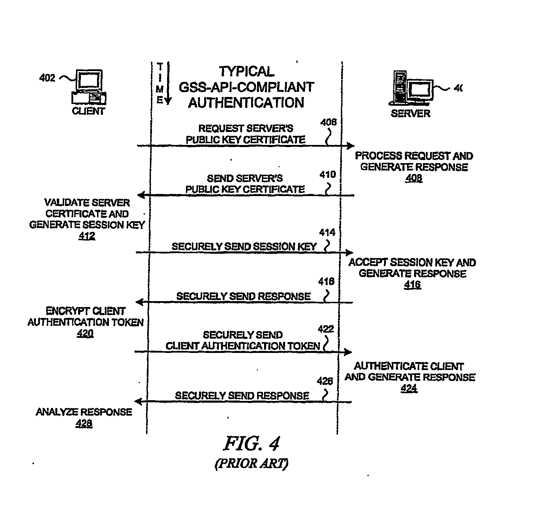

Whereas **FIG. 3** illustrates a generic method for a client to employ a digital certificate for accessing a server, **FIG. 4** illustrates details of the transfer of information between the client and the server for establishing a secure communication context, which was not described with respect to **FIG. 3.**

With reference now to **FIG. 4,** a data flow diagram depicts a typical GSS-API-compliant mechanism for establishing a secure communication context between a client and a server. The process commences with client **402** sending a request to server **404** for the server's public key certificate (step **406**). The server processes the request and generates a response (step **408**) that contains or accompanies a copy of the server's public key certificate that is returned to the requesting client (step **410**).

The client validates the server's public key certificate and generates a session key (step **412**); the session key is preferably a symmetric secret key. The client then securely sends the session key to the server (step **414**). For example, the client may encrypt the session key with the server's public key that has been previously extracted from the server's public key certificate. The encrypted session key is then placed into a message that is digitally signed with the client's private key. The server is able to verify the digital signature on the message with the client's public key to ensure that the message has been created and signed by the client, and the session key may be decrypted only by the server. For a description of applicable formats for digital envelopes and digital signatures, see "PKCS #7: Cryptographic Message Syntax Standard", Version 1.5, RSA Laboratories Technical Note, 11/01/1993.

The server subsequently accepts the session key, e.g., after verifying the client's digital signature and decrypting the session key, and then generates a secure response (step **416**), which is returned to the client (step **418**). The client then generates and encrypts a client authentication token (step **420**) and securely sends the client authentication token to the server (step **422**). After extracting the client authentication token from the received message, the server authenticates the client and generates a response (step **424**), which is securely returned to the client (step **426**). The client then analyzes the response to determine whether the client has been positively authenticated by the server or whether the server has rejected the client's authentication request (step **428**), and the process is concluded.

As noted above, **FIG. 4** illustrates a typical method for establishing a secure communication context in accordance with a known GSS-API-compliant mechanism. In contrast, the present approach is directed to an improved public-key-based GSS-API-compliant mechanism for establishing a secure communication context, as described herein below with respect to the remaining figures.

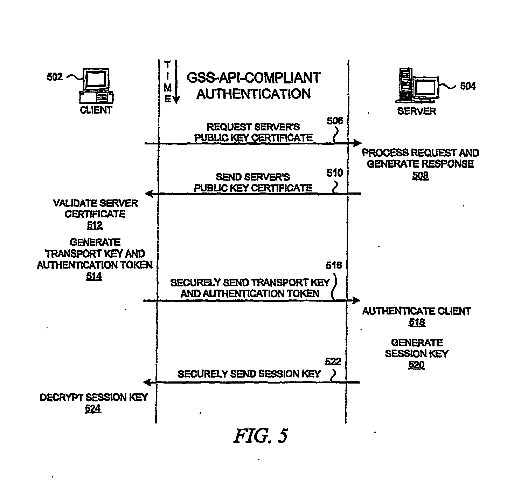

With reference now to **FIG. 5,** a data flow diagram depicts a typical GSS-API-compliant mechanism for establishing a secure communication context between a client and a server in accordance with an embodiment of the present invention. The process commences with client **502** sending a request to server **504** to obtain the server's public key certificate (step **506**), e.g., when the client attempts to bind to the server application. Upon receiving the request, the server processes the request and generates a response (step **508**) that contains or accompanies a copy of the server's public key certificate that is returned to the requesting client (step **510**).

After receiving the server's digital certificate, the client validates the server's public key certificate to ensure that it has been signed by a trusted certificate authority (step **512**). It should be noted that the client may recognize that it has previously validated and stored a copy of this server's public key certificate, thereby allowing the client to obtain the server's certificate by retrieving it from a local cache. Alternatively, the server's public key certificate may be provided to the client in some other manner, e.g., through retrieval of the server's public key certificate by the client from a directory or similar datastore.

Assuming that the server's certificate has been positively validated, the client extracts the server's public key from the certificate and caches it. The client then generates a random symmetric secret key along with an authentication token (step **514**); this particular secret key is herein referred to as the transport key. The authentication token may comprise a username-password pair, a time-stamped secure ticket from a principal authenticator, a public key certificate associated with the client, or some other authenticatable information; the client may generate the authentication token, when appropriate, by merely copying a data item, such as a secure ticket.

The client then securely sends the transport key and the authentication token to the server (step **516**). The transmission of the transport key and the authentication token from the client to the server is secured in some manner through encryption using the server's public key. For example, the transport key and the authentication token may be encrypted using the server's public key to form a digital envelope on the message that is sent to the server. Alternatively, the transport key and the authentication token may be encrypted individually for inclusion in a message to the server.

Upon receiving the secure message from the client, the server decrypts the digital envelope with the server's private key. The server then authenticates the client or the user of the client (step **518**) using a process that is appropriate for the type of authentication token that has been sent to the server, i.e. based on the type of authentication token that has been sent by the client to the server. For example, the server may perform an LDAP lookup for a username-password pair or may validate a secure ticket, e.g., a Kerberos ticket. In the case in which the authentication token is a client certificate, the authentication is achieved when the server responds with a random session key encrypted by the client public key (a digital envelope) which only the true client can decrypt using the private key associated with the public key in the client certificate; the digital envelope is still sent encrypted under the transport key that the client sends to the server to prevent a man in the middle attack. Assuming that the client has been authenticated, the server then generates a random symmetric secret key (step **520**) which will be used to secure messages within the communication context that is being created between the client and the server; this particular secret key is herein referred to as the session key.

The server then securely sends the session key to the client (step **522**). The transmission of the session key from the server to the client is secured in some manner through encryption using the transport key. For example, the server may place the session key into a session token that the server encrypts with the transport key; the server may then place the encrypted session token into a message that the server seals with the client's public key and then encrypts the resulting envelope with the transport key. Alternatively, the server may use the transport key to encrypt the session key individually before placing the encrypted session key into a message to be sent to the client. As another example of generating a secure message, the server may use the transport key to generate a digital envelope on a message that contains the session key.

After receiving the message, the client uses the transport key to decrypt the appropriate portion of the message and to extract the session key (step **524**), thereby concluding the process. Depending on the authentication mechanism that was used, the server may have generated the message in different formats; hence, the client may obtain the session key directly from a session token, or the client may need to decrypt the session key with the client's private key if the server had also used the client's public key to encrypt the session key or to encrypt a portion of the message that contains the session key. Additionally, messages between the client and the server may include a sequence number to secure against replay attacks.

After the process has been concluded, the client and the server both possess a copy of the session key that can be subsequently employed to secure messages between the client and the server, thereby securely ensuring data confidentiality and data integrity for the communication context between the client and the server. For example, the client may use the session key to securely send request messages to the server to access resources that are controlled by the server. It should be understood by one having ordinary skill in the art that the session key may be employed for a given communication session between the client and the server, that the given communication session between the client and the server may be concurrent with other secure communication sessions between the client and the server and/or other servers within secure contexts provided by the GSS-API-compliant mechanism of a preferred embodiment of the present invention or within secure contexts provided by some other mechanism, and that the given communication session may be terminated while allowing those concurrent sessions to continue.

The advantages of this approach should be apparent in view of the detailed description that is provided above. Compared with prior art GSS-API-compliant mechanisms for establishing a secure communication context, preferred embodiments of the present invention provide the ability to expand from a username-password type of client-server authentication operation to a full public-key infrastructure (PKI) solution on an as-needed basis while continuing to use the same GSS-API-compliant mechanism as the previously implemented username-password solution. In addition, the preferred embodiment of the present invention allows a client to authenticate using a public key certificate, which LIPKEY does not allow. Moreover, the preferred embodiment of the present invention allows a variety of client authentication mechanisms, such as username-password, secure ticket, or public key certificate, which SPKM does not support. Furthermore, the preferred embodiment of the present invention minimizes network traffic and cryptographic operations in comparison to LIPKEY, e.g., four messages are exchanged between a client and a server instead of LIPKEY's six messages.

It is important to note that while a preferred embodiment of the present invention has been described in the context of a fully functioning data processing system, those of ordinary skill in the art will appreciate that the processes of the preferred embodiment of the present invention are capable of being distributed in the form of instructions in a computer readable medium and a variety of other forms, regardless of the particular type of signal bearing media actually used to carry out the distribution. Examples of computer readable media include media such as EPROM, ROM, tape, paper, floppy disc, hard disk drive, RAM, and CD-ROMs and transmission-type media, such as digital and analog communications links.

A method is generally conceived to be a self-consistent sequence of steps leading to a desired result. These steps require physical manipulations of physical quantities. Usually, though not necessarily, these quantities take the form of electrical or magnetic signals capable of being stored, transferred, combined, compared, and otherwise manipulated. It is convenient at times, principally for reasons of common usage, to refer to these signals as bits, values, parameters, items, elements, objects, symbols, characters, terms, numbers, or the like. It should be noted, however, that all of these terms and similar terms are to be associated with the appropriate physical quantities and are merely convenient labels applied to these quantities.

The description of preferred embodiments of the present invention have been presented for purposes of illustration but is not intended to be exhaustive or limited to the disclosed embodiments. Many modifications and variations will be apparent to those of ordinary skill in the art.

## Claims

1. A method for establishing a secure context for communicating messages between a first system (504) and a second system (502), the method comprising:
obtaining (510) by the second system a first public key certificate of the first system, wherein the second system validates (512) the first public key certificate that contains a public key;
**characterized by**
generating by the second system a transport key, wherein the transport key is a symmetric secret key;
placing by the second system the transport key and an authentication token into a first message secured with the public key;
sending (516) the first message from the second system to the first system;
receiving (522) at the second system from the first system a second message secured with the transport key in response to sending the first message to the first system;
extracting by the second system a session key from the second message, wherein the session key is a symmetric secret key;
employing the session key to secure subsequent messages sent by the second system to the first system
wherein the authentication token comprises a second public key certificate of the second system, and wherein the first system is able to validate (518) the second public key certificate, and the method further comprises decrypting, by the second system using a private key associated with the second public key certificate, a digital envelope in the second message containing the session key, wherein the digital envelope is created by the first system using a public key contained in the second public key certificate.

2. A method for establishing a secure context for communicating messages between a first system (504) and a second (502) system, the method comprising:
providing (510) by the first system a public key certificate associated with the first system, wherein the second system is able to validate the public key certificate;
**characterized by**
receiving (516) at the first system from the second system a first message, wherein the first message is secured with a public key from the public key certificate associated with the first system, wherein the first message contains a transport key and an authentication token, and wherein the transport key is a symmetric secret key;
authenticating (518) the second system by the first system based on the authentication token;
generating (516) by the first system a session key, wherein the session key is a symmetric secret key;
placing by the first system the session key into a second message secured with the transport key;
sending (522) the second message from the first system to the second system in response to receiving the first message; and
receiving at the first system from the second system subsequent messages secured with the session key
wherein the authentication token comprises a public key certificate associated with the second system, and the method further comprising creating, by the first system using a public key contained in the public key certificate associated with the second system, a digital envelope in the second message containing the session key.

3. A computer program product comprising computer program code which, when executed on a data processing system, instructs the data processing system to carry out the method as claimed in claim 1.

4. A computer program product comprising computer program code which, when executed on a data processing system, instructs the data processing system to carry out the method as claimed in claim 2.

5. Apparatus for establishing a secure context for communicating messages between a first system and a second system, the apparatus comprising:
means for obtaining by the second system a first public key certificate of the first system, wherein the second system is able to validate the first public key certificate that contains a public key;
**characterized by**
means for generating by the second system a transport key, wherein the transport key is a symmetric secret key;
means for placing by the second system the transport key and an authentication token into a first message secured with the public key;
means for sending the first message from the second system to the first system;
means for receiving at the second system from the first system a second message secured with the transport key in response to sending the first message to the first system;
means for extracting by the second system a session key from the second message, wherein the session key is a symmetric secret key;
means for employing the session key to secure subsequent messages sent by the second system to the first system
wherein the authentication token comprises a second public key certificate of the second system, and wherein the first system is able to validate the second public key certificate, and the apparatus further comprises means for decrypting, by the second system using a private key associated with the second public key certificate, a digital envelope in the second message containing the session key, wherein the digital envelope was created by the first system using a public key contained in the second public key certificate.

6. Apparatus for establishing a secure context for communicating messages between a first system and a second system, the apparatus comprising:
means for providing by the first system a public key certificate associated with the first system, wherein the second system is able to validate the public key certificate;
**characterized by**
means for receiving at the first system from the second system a first message, wherein the first message is secured with a public key from the public key certificate associated with the first system, wherein the first message contains a transport key and an authentication token, and wherein the transport key is a symmetric secret key;
means for authenticating the second system by the first system based on the authentication token;
means for generating by the first system a session key, wherein the session key is a symmetric secret key;
means for placing by the first system the session key into a second message secured with the transport key;
means for sending the second message from the first system to the second system in response to receiving the first message; and
means for receiving at the first system from the second system subsequent messages secured with the session key
wherein the authentication token comprises a public key certificate associated with the second system, and the apparatus further comprises means for creating, by the first system using a public key contained in the public key certificate associated with the second system, a digital envelope in the second message containing the session key.

## Patentansprüche

1. Verfahren zum Aufbau eines sicheren Kontexts zum Austausch von Nachrichten zwischen einem ersten System (504) und einem zweiten System (502), wobei das Verfahren Folgendes umfasst:
Abrufen (510) eines ersten Zertifikats mit öffentlichem Schlüssel des ersten Systems durch das zweite System, wobei das zweite System das erste Zertifikat mit öffentlichem Schlüssel, das einen öffentlichen Schlüssel enthält, auf Gültigkeit prüft (512);
**dadurch gekennzeichnet, dass**
von dem zweiten System ein Transportschlüssel erzeugt wird, wobei der Transportschlüssel ein symmetrischer geheimer Schlüssel ist;
der Transportschlüssel und ein Identitätsprüfungselement (authentication token) von dem zweiten System in eine erste Nachricht gestellt werden, die mit dem öffentlichen Schlüssel gesichert wird;
die erste Nachricht von dem zweiten System an das erste System gesendet wird (516);
als Reaktion auf das Senden der ersten Nachricht an das erste System an dem zweiten System eine zweite Nachricht von dem ersten System empfangen wird (522), die mit dem Transportschlüssel gesichert ist;
der zweiten Nachricht von dem zweiten System ein Sitzungsschlüssel entnommen wird, wobei der Sitzungsschlüssel ein symmetrischer geheimer Schlüssel ist;
der Sitzungsschlüssel zur Sicherung nachfolgender Nachrichten, die von dem zweiten System an das erste System gesendet werden, verwendet wird,
wobei das Identitätsprüfungselement ein zweites Zertifikat mit öffentlichem Schlüssel des zweiten Systems umfasst und wobei das erste System das zweite Zertifikat mit öffentlichem Schlüssel auf Gültigkeit prüfen (518) kann und wobei das Verfahren des Weiteren die Entschlüsselung eines digitalen Umschlags in der zweiten Nachricht, die den Sitzungsschlüssel enthält, durch das zweite System unter Verwendung eines privaten Schlüssels, der zu dem zweiten Zertifikat mit öffentlichem Schlüssel gehört, umfasst, wobei der digitale Umschlag von dem ersten System unter Verwendung eines öffentlichen Schlüssels erzeugt wird, der in dem zweiten Zertifikat mit öffentlichem Schlüssel enthalten ist.

2. Verfahren zum Aufbau eines sicheren Kontexts zum Austausch von Nachrichten zwischen einem ersten System (504) und einem zweiten System (502), wobei das Verfahren Folgendes umfasst:
Bereitstellen (510) eines dem ersten System zugehörigen Zertifikats mit öffentlichem Schlüssel durch das erste System, wobei das zweite System das Zertifikat mit öffentlichem Schlüssel auf Gültigkeit prüfen kann;
**dadurch gekennzeichnet, dass**
an dem ersten System eine erste Nachricht von dem zweiten System empfangen wird (516), wobei die erste Nachricht mit einem öffentlichen Schlüssel von dem Zertifikat mit öffentlichem Schlüssel gesichert ist, das zu dem ersten System gehört, wobei die erste Nachricht einen Transportschlüssel und ein Identitätsprüfungselement enthält und wobei der Transportschlüssel ein symmetrischer geheimer Schlüssel ist;
die Identität des zweiten Systems von dem ersten System auf der Grundlage des Identitätsprüfungselements nachgewiesen wird (518);
von dem ersten System ein Sitzungsschlüssel erzeugt wird (516), wobei der Sitzungsschlüssel ein symmetrischer geheimer Schlüssel ist;
der Sitzungsschlüssels von dem ersten System in eine zweite Nachricht gestellt wird, die mit dem Transportschlüssel gesichert wird;
die zweite Nachricht von dem ersten System an das zweite System als Reaktion auf den Empfang der ersten Nachricht gesendet wird (522); und
nachfolgende Nachrichten, die mit dem Sitzungsschlüssel gesichert werden, von dem zweiten System an dem ersten System empfangen werden,
wobei das Identitätsprüfungselement ein Zertifikat mit öffentlichem Schlüssel umfasst, das zu dem zweiten System gehört, und wobei das Verfahren des Weiteren das Erzeugen eines digitalen Umschlags in der zweiten Nachricht, die den Sitzungsschlüssel enthält, durch das erste System unter Verwendung eines öffentlichen Schlüssels umfasst, der in dem Zertifikat mit öffentlichem Schlüssel enthalten ist, welches zu dem zweiten System gehört.

3. Rechnerprogrammprodukt, das Rechnerprogrammcode umfasst, der, wenn er auf einem Datenverarbeitungssystem ausgeführt wird, das Datenverarbeitungssystem anweist, das Verfahren nach Anspruch 1 auszuführen.

4. Rechnerprogrammprodukt, das Rechnerprogrammcode umfasst, der, wenn er auf einem Datenverarbeitungssystem ausgeführt wird, das Datenverarbeitungssystem anweist, das Verfahren nach Anspruch 2 auszuführen.

5. Vorrichtung zum Aufbau eines sicheren Kontexts zum Austausch von Nachrichten zwischen einem ersten System und einem zweiten System, wobei die Vorrichtung folgendes umfasst:
ein Mittel, um durch das zweite System ein erstes Zertifikat mit öffentlichem Schlüssel des ersten Systems abzurufen, wobei das zweite System das erste Zertifikat mit öffentlichem Schlüssel, das einen öffentlichen Schlüssel enthält, auf Gültigkeit prüfen kann;
**gekennzeichnet durch**
ein Mittel, um **durch** das zweite System einen Transportschlüssel zu erzeugen, wobei der Transportschlüssel ein symmetrischer geheimer Schlüssel ist;
ein Mittel, um den Transportschlüssel und ein Identitätsprüfungselement **durch** das zweite System in eine erste Nachricht zu stellen, die mit dem öffentlichen Schlüssel gesichert wird;
ein Mittel, um die erste Nachricht von dem zweiten System an das erste System zu senden;
ein Mittel, um als Reaktion auf das Senden der ersten Nachricht an das erste System an dem zweiten System eine zweite Nachricht von dem ersten System zu empfangen, die mit dem Transportschlüssel gesichert ist;
ein Mittel, um der zweiten Nachricht **durch** das zweite System einen Sitzungsschlüssel zu entnehmen, wobei der Sitzungsschlüssel ein symmetrischer geheimer Schlüssel ist;
ein Mittel, um den Sitzungsschlüssel zur Sicherung von nachfolgenden Nachrichten zu verwenden, die von dem zweiten System an das erste System gesendet werden,
wobei das Identitätsprüfungselement ein zweites Zertifikat mit öffentlichem Schlüssel des zweiten Systems umfasst und wobei das erste System das zweite Zertifikat mit öffentlichem Schlüssel auf Gültigkeit prüfen kann und wobei die Vorrichtung des Weiteren ein Mittel umfasst, um einen digitalen Umschlag in der zweiten Nachricht, die den Sitzungsschlüssel enthält, **durch** das zweite System unter Verwendung eines privaten Schlüssels zu entschlüsseln, der zu dem zweiten Zertifikat mit dem öffentlichen Schlüssel gehört, wobei der digitale Umschlag von dem ersten System unter Verwendung eines öffentlichen Schlüssels erzeugt wurde, der in dem zweiten Zertifikat mit öffentlichen Schlüssel enthalten ist.

6. Vorrichtung zum Aufbau eines sicheren Kontexts zum Austausch von Nachrichten zwischen einem ersten System und einem zweiten System, wobei die Vorrichtung folgendes umfasst:
ein Mittel, um durch das erste System ein Zertifikat mit öffentlichem Schlüssel bereitzustellen, das zu dem ersten System gehört, wobei das zweite System das Zertifikat mit öffentlichen Schlüssel auf Gültigkeit prüfen kann;
**gekennzeichnet durch**
ein Mittel, um an dem ersten System eine erste Nachricht von dem zweiten System zu empfangen, wobei die erste Nachricht mit einem öffentlichen Schlüssel von dem Zertifikat mit öffentlichen Schlüssel gesichert ist, das zu dem ersten System gehört, wobei die erste Nachricht einen Transportschlüssel und ein Identitätsprüfungselement enthält und wobei der Transportschlüssel ein symmetrischer geheimer Schlüssel ist;
ein Mittel, um die Identität des zweiten Systems **durch** das erste System auf der Grundlage des Identitätsprüfungselements nachzuweisen;
ein Mittel, um **durch** das erste System einen Sitzungsschlüssel zu erzeugen, wobei der Sitzungsschlüssel ein symmetrischer geheimer Schlüssel ist;
ein Mittel, um den Sitzungsschlüssel **durch** das erste System in eine zweite Nachricht zu stellen, die mit dem Transportschlüssel gesichert wird;
ein Mittel, um die zweite Nachricht als Reaktion auf den Empfang der ersten Nachricht von dem ersten System an das zweite System zu senden; und
ein Mittel, um an dem ersten System von dem zweiten System nachfolgende Nachrichten zu empfangen, die mit dem Sitzungsschlüssel gesichert sind,
wobei das Identitätsprüfungselement ein Zertifikat mit öffentlichem Schlüssel umfasst, das zu dem zweiten System gehört, und wobei die Vorrichtung des Weiteren ein Mittel zum Erzeugen eines digitalen Umschlags in der zweiten Nachricht, die den Sitzungsschlüssel enthält, **durch** das erste System unter Verwendung eines öffentlichen Schlüssels umfasst, der in dem Zertifikat mit öffentlichem Schlüssel enthalten ist, das zu dem zweiten System gehört.

## Revendications

1. Procédé destiné à établir un contexte sécurisé pour une communication de messages entre un premier système (504) et un second système (502), le procédé comprenant les étapes consistant à :
obtenir (510) par le biais du second système un premier certificat de clé publique du premier système, où le second système valide (512) le premier certificat de clé publique qui contient une clé publique,
**caractérisé par** les étapes consistant à :
générer par le biais du second système une clé de transport, où la clé de transport est une clé secrète symétrique,
placer par le biais du second système la clé de transport et un jeton d'authentification dans un premier message sécurisé avec la clé publique,
envoyer (516) le premier message du second système au premier système,
recevoir (522) au niveau du second système depuis le premier système un second message sécurisé avec la clé de transport en réponse à l'envoi du premier message au premier système,
extraire par le biais du second système une clé de session à partir du second message, où la clé de session est une clé secrète symétrique,
employer la clé de session pour sécuriser des messages ultérieurs envoyés par le second système au premier système,
où le jeton d'authentification comprend un second certificat de clé publique du second système, et où le premier système peut valider (518) le second certificat de clé publique, et le procédé comprend en outre le décryptage, par le second système qui utilise une clé privée associée au second certificat de clé publique, d'une enveloppe numérique dans le second message contenant la clé de session, où l'enveloppe numérique est créée par le premier système en utilisant une clé publique contenue dans le second certificat de clé publique.

2. Procédé destiné à établir un contexte sécurisé pour une communication de messages entre un premier système (504) et un second système (502), le procédé comprenant les étapes consistant à :
procurer (510) par le biais du premier système un certificat de clé publique associé au premier système, où le second système peut valider le certificat de clé publique,
**caractérisé par** les étapes consistant à :
recevoir (516) au niveau du premier système depuis le second système un premier message, où le premier message est sécurisé avec une clé publique provenant du certificat de clé publique associé au premier système, où le premier message contient une clé de transport et un jeton d'authentification, et où la clé de transport est une clé secrète symétrique,
authentifier (518) le second système par le biais du premier système sur la base du jeton d'authentification,
générer (516) par le biais du premier système une clé de session, où la clé de session est une clé secrète symétrique,
placer par le biais du premier système la clé de session dans un second message sécurisé avec la clé de transport,
envoyer (522) le second message depuis le premier système au second système en réponse à la réception du premier message, et
recevoir au niveau du premier système depuis le second système des messages ultérieurs sécurisés avec la clé de session
où le jeton d'authentification comprend un certificat de clé publique associé au second système, et le procédé comprend en outre la création, par le premier système en utilisant une clé publique contenue dans le certificat de clé publique associé au second système, d'une enveloppe numérique dans le second message contenant la clé de session.

3. Produit de programme informatique comprenant un code de programme informatique qui, lorsqu'il est exécuté sur un système de traitement de données, donne pour instruction au système de traitement de données d'exécuter le procédé selon la revendication 1.

4. Produit de programme informatique comprenant un code de programme informatique qui, lorsqu'il est exécuté sur un système de traitement de données, donne pour instruction au système de traitement de données d'exécuter le procédé selon la revendication 2.

5. Dispositif destiné à établir un contexte sécurisé pour effectuer une communication de messages entre un premier système et un second système, le dispositif comprenant :
un moyen destiné à obtenir par le biais du second système un premier certificat de clé publique du premier système, où le second système peut valider le premier certificat de clé publique qui contient une clé publique,
**caractérisé par**
un moyen destiné à générer par le biais du second système une clé de transport, où la clé de transport est une clé secrète symétrique,
un moyen destiné à placer par le biais du second système la clé de transport et un jeton d'authentification dans un premier message sécurisé avec la clé publique,
un moyen destiné à envoyer le premier message du second système au premier système,
un moyen destiné à recevoir au niveau du second système depuis le premier système un second message sécurisé avec la clé de transport en réponse à l'envoi du premier message au premier système,
un moyen destiné à extraire par le biais du second système une clé de session du second message, où la clé de session est une clé secrète symétrique,
un moyen destiné à employer la clé de session pour sécuriser les messages ultérieurs envoyés par le second système au premier système,
où le jeton d'authentification comprend un second certificat de clé publique du second système, et où le premier système peut valider le second certificat de clé publique, et le dispositif comprend en outre un moyen destiné à décrypter, par le biais du second système utilisant une clé privée associée au second certificat de clé publique, une enveloppe numérique dans le second message contenant la clé de session, où l'enveloppe numérique a été créée par le premier système en utilisant une clé publique contenue dans le second certificat de clé publique.

6. Dispositif destiné à établir un contexte sécurisé pour effectuer une communication de messages entre un premier système et un second système, le dispositif comprenant :
un moyen destiné à procurer par le biais du premier système un certificat de clé publique associé au premier système, où le second système peut valider le certificat de clé publique,
**caractérisé par**
un moyen destiné à recevoir au niveau du premier système depuis le second système un premier message, où le premier message est sécurisé avec une clé publique provenant du certificat de clé publique associé au premier système, où le premier message contient une clé de transport et un jeton d'authentification, et où la clé de transport est une clé secrète symétrique,
un moyen destiné à authentifier le second système par le biais du premier système sur la base du jeton d'authentification,
un moyen destiné à générer par le biais du premier système une clé de session, où la clé de session est une clé secrète symétrique,
un moyen destiné à placer par le biais du premier système la clé de session dans un second message sécurisé avec la clé de transport,
un moyen destiné à envoyer le second message depuis le premier système au second système en réponse à la réception du premier message, et
un moyen destiné à recevoir au niveau du premier système depuis le second système des messages ultérieurs sécurisés avec la clé de session,
où le jeton d'authentification comprend un certificat de clé publique associé au second système, et le dispositif comprend en outre un moyen destiné à créer, par le biais du premier système utilisant une clé publique contenue dans le certificat de clé publique associé au second système, une enveloppe numérique dans le second message contenant la clé de session.
